# DEMANDE DE BREVET EUROPEEN

(11) **EP 1 293 806 A2**
(43) Date de publication de la demande: **19.03.2003**
(21) Numéro de dépôt: 02360214.7
(22) Date de dépôt: 17.07.2002
(51) Int. Cl.: G01V 3/08

(54) **Procédé de détection d'un objet en un matériau conducteur et capteur correspondant**

(30) Priorité: 19.07.2001 FR 0109686
(71) Demandeur: Senstronic (Société Anonyme), 67700 Saverne (FR)
(72) Inventeur: Kirchdoerffer, Rémy, 67110 Reichshoffen (FR)
(74) Mandataire: Nuss, Pierre

(57) **Abrégé**

La présente invention concerne un procédé de détection d'un objet en un matériau conducteur électrique et un dispositif de capteur correspondant.

Procédé caractérisé en ce qu'il consiste à générer, au moyen d'une inductance (3) alimentée en conséquence, un champ magnétique apte à induire des courants de Foucault dans ledit matériau conducteur, lorsque ledit objet (1) se situe à une distance appropriée de ladite inductance (3), à couper de manière abrupte l'alimentation et le courant circulant dans ladite inductance (3), à relever le signal de tension et/ou de courant induit(e) dans cette inductance (3) par les courants de Foucault précités après coupure et à analyser les caractéristiques dudit signal ou desdits signaux, notamment sa ou leur décroissance, pour en déduire des informations concernant la nature et/ou l'épaisseur du matériau conducteur de l'objet (1) détecté et/ou la distance entre ladite inductance (3) et ledit objet (1).

## Description

La présente invention concerne le domaine de la détection, notamment de la détection d'objets ou d'articles en un matériau conducteur ou contenant un tel matériau, et a pour objet un procédé de détection d'un tel objet ainsi qu'un dispositif capteur correspondant.

Il existe déjà de nombreux types de capteurs permettant de détecter la présence d'objets conducteurs ou revêtu d'un matériau conducteur, en générant des champs magnétiques dont les caractéristiques sont influencées par la présence et l'approche de tels objets.

Ces modifications du champ généré sont relevées par ces capteurs et interprétées pour en déduire des informations quant à la présence d'un objet et à son positionnement (distance) par rapport auxdits capteurs.

Toutefois, ces derniers ne permettent de fournir aucune autre information sur l'objet détecté, telle que notamment la nature du matériau conducteur ou l'épaisseur de ce dernier, en particulier quant il recouvre au moins une partie dudit objet.

Par ailleurs, les capteurs existants précités comprennent généralement des circuits oscillants sensibles aux variations de température et ne permettant pas, du fait de la nature de la détection, la mise en place du capteur dans un boîtier de protection comportant une face active métallique.

La présente invention a notamment pour but de pallier au moins certains des inconvénients précités.

A cet effet, elle a pour objet un procédé de détection d'un objet en un matériau conducteur (magnétique ou amagnétique), renfermant une partie au moins en un tel matériau ou au moins partiellement recouvert d'un tel matériau, caractérisé en ce qu'il consiste à générer, au moyen d'une inductance alimentée en conséquence, un champ magnétique apte à induire des courants de Foucault dans ledit matériau conducteur, lorsque ledit objet se situe à une distance appropriée de ladite inductance, à couper de manière abrupte l'alimentation et le courant circulant dans ladite inductance, à relever le signal de tension et/ou de courant induit(e) dans cette inductance par les courants de Foucault précités après coupure et à analyser les caractéristiques dudit signal ou desdits signaux, notamment sa ou leur décroissance, pour en déduire des informations concernant la nature et/ou l'épaisseur du matériau conducteur de l'objet 1 détecté et/ou la distance entre ladite inductance et ledit objet.

Elle concerne également un dispositif de capteur inductif, notamment pour la mise en oeuvre du procédé de détection, destiné à détecter et à permettre la caractérisation au moins partielle d'un objet en un matériau conducteur électrique, renfermant une partie au moins en un tel matériau ou au moins partiellement recouvert d'un tel matériau, caractérisé en ce qu'il comprend principalement une inductance disposée au niveau de la partie ou de la face active dudit capteur et apte à générer un champ magnétique susceptible d'induire des courants de Foucault dans ledit matériau conducteur, des moyens d'alimentation électrique de ladite inductance et de coupure abrupte du courant circulant dans cette dernière, des moyens d'acquisition du signal de tension et/ou du signal de courant induit(s) dans ladite inductance par lesdits courants de Foucault précités après coupure et des moyens d'analyse des caractéristiques dudit signal ou desdits signaux généré(s) par induction pour en déduire des informations concernant la nature et/ou l'épaisseur du matériau conducteur de l'objet détecté et/ou la distance entre ladite inductance et ledit objet (ou partie d'objet).

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 représente les diagrammes temporels de la tension d'alimentation (U) appliquée à l'inductance faisant partie du dispositif capteur, du courant circulant dans l'inductance (I), et de la tension appliquée et induite aux bornes de ladite inductance (Ui) ;
la figure 2 représente le détail A de la figure 1 à une autre échelle, et,
la figure 3 est une représentation schématique d'un dispositif de capteur inductif selon un mode de réalisation de l'invention.

En se référant aux figures des dessins annexés, le procédé de détection consiste essentiellement à générer, au moyen d'une inductance 3 alimentée en conséquence, un champ magnétique apte à induire des courants de Foucault dans ledit matériau conducteur, lorsque ledit objet 1 se situe à une distance appropriée de ladite inductance 3, à couper de manière abrupte l'alimentation et le courant circulant dans ladite inductance 3, à relever le signal de tension et/ou de courant induit(e) dans cette inductance 3 par les courants de Foucault précités après coupure et à analyser les caractéristiques dudit signal ou desdits signaux, notamment sa ou leur décroissance au niveau du pic inverse provoqué par la coupure brutale du courant d'alimentation, pour en déduire des informations concernant la nature et/ou l'épaisseur du matériau conducteur de l'objet 1 détecté et/ou la distance entre ladite inductance 3 et ledit objet 1, ou partie d'objet.

En fonction des informations déduites, il pourra être ou non procédé à l'exécution d'une action, telle que par exemple la commutation d'un circuit.

Afin de pouvoir réaliser en continu des séquences de détection successives et rapprochées dans le temps, l'alimentation de l'inductance 3 est réalisée au moyen d'impulsions de tension répétitives, la coupure du courant circulant dans l'inductance 3 étant synchronisée avec les fronts descendants desdites impulsions.

La fréquence de répétition des séquences successives de détection, déterminée par la fréquence des impulsions de tension d'alimentation, dépendra notamment de la vitesse de traitement disponible pour l'analyse et de la rapidité de détection recherchée.

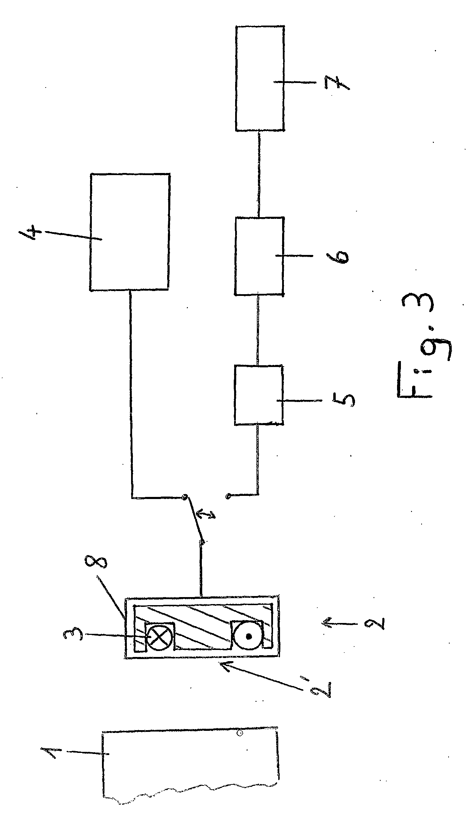

Conformément à l'invention et comme le montre notamment la figure 3 des dessins annexés, le procédé consiste, en termes fonctionnels, à relier l'inductance 3 à une unité d'alimentation 4, par exemple sous la forme d'un générateur de signaux impulsionnels, durant la phase de génération du champ magnétique par ladite inductance 3 formant moyen émetteur de champ, et à relier ladite inductance 3 à des moyens 5 à 7 d'acquisition et d'exploitation des signaux de tension induits dans ladite inductance, par exemple sous la forme d'un module de numérisation, de traitement et d'évaluation desdits signaux, durant la phase d'induction magnétique par les courants de Foucault décroissants dans l'inductance 3 formant moyen récepteur de champ, les deux phases précitées étant répétées pour chaque impulsion du signal impulsionnel délivré par l'unité d'alimentation 4.

Préférentiellement, l'acquisition du signal de tension induite dans l'inductance 3 après coupure du courant circulant dans cette dernière consiste à échantillonner ledit signal sur un intervalle temporel s'étendant entre 10 microsecondes et 150 microsecondes, préférentiellement entre 20 et 100 microsecondes, après ladite coupure (phase précédant l'annulation du pic inverse), et à réaliser une conversion analogique/numérique des échantillons récupérés.

L'intervalle de temps précité permet l'analyse de la partie du signal induit fournissant les informations pertinentes autorisant la déduction des caractéristiques relatives au matériau conducteur.

Selon une première variante de réalisation de l'invention, l'analyse des caractéristiques du signal de tension ou de courant induit(e) dans l'inductance 3 consiste à déterminer la forme et la position, dans un diagramme temporel, de la courbe dudit signal au niveau de sa partie cintrée ou les valeurs de certains points déterminés au moins de cette courbe (définis par leur situation temporelle par rapport à l'instant de coupure), à comparer ces caractéristiques avec des caractéristiques de référence mémorisées, par exemple déterminées pendant une phase préalable de calibrage, et à en déduire la nature, la composition, la masse et/ou l'épaisseur du matériau conducteur de l'objet 1 soumis à l'influence du champ magnétique généré par ladite inductance 3.

Selon une seconde variante de réalisation de l'invention, l'analyse des caractéristiques du signal de tension ou d'intensité induit(e) consiste à intégrer ledit signal sur une période temporelle déterminée en durée et en décalage par rapport à l'instant de coupure, puis à comparer la valeur intégrale résultante avec des valeurs de référence mémorisées, par exemple déterminées pendant une phase préalable de calibrage, et à en déduire la nature, la composition, la masse et/ou l'épaisseur du matériau conducteur de l'objet 1 soumis à l'influence du champ magnétique généré par ladite inductance 3.

Afin de pouvoir garantir avec certitude la fiabilité des informations déduites, en s'affranchissant d'une éventuelle détection erronée isolée, ou éventuellement pour réduire la fréquence de répétition des opérations d'évaluation nécessitant de grandes puissances de calcul et pouvant entraîner des délais dans l'obtention des résultats, le procédé peut consister à analyser successivement plusieurs signaux de tension ou de courant induit(e) associés à plusieurs séquences de détection consécutives et à réaliser une évaluation globale des caractéristiques de ces différents signaux.

La présente invention a également pour objet comme le montre la figure 3 à titre d'exemple de réalisation, un dispositif de capteur inductif 2, notamment pour la mise en oeuvre du procédé de détection précité, destiné à détecter et à permettre la caractérisation au moins partielle d'un objet 1 au moins partiellement en un matériau conducteur électrique ou au moins partiellement recouvert d'un tel matériau.

Ce dispositif de capteur 2 comprend principalement une inductance 3 disposée au niveau de la partie ou de la face active 2' dudit capteur 2 et apte à générer un champ magnétique susceptible d'induire des courants de Foucault dans ledit matériau conducteur, des moyens 4 d'alimentation électrique de ladite inductance 3 et de coupure abrupte du courant circulant dans cette dernière, des moyens 5, 6 d'acquisition du signal de tension et/ou du signal de courant induit(s) dans ladite inductance 3 par lesdits courants de Foucault précités après coupure et des moyens 7 d'analyse des caractéristiques dudit signal ou desdits signaux généré(s) par induction pour en déduire des informations concernant la nature et/ou l'épaisseur du matériau conducteur de l'objet 1 détecté et/ou la distance entre ladite inductance 3 et ledit objet 1.

L'inductance 3 peut consister en une bobine avec ou sans noyau ou armature en ferrite (en fonction des caractéristiques recherchées pour le dispositif 2) et présenter une forme et une taille adaptées à la détection à réaliser.

Avantageusement, les moyens 4 d'alimentation électrique consistent en un générateur d'impulsions de tension, préférentiellement de forme rectangulaire, et en ce que l'actionnement des moyens de coupure du courant circulant dans l'inductance 3 est synchronisée avec les fronts descendants desdites impulsions.

Selon une caractéristique de l'invention, les moyens d'acquisition comprennent des moyens 5 d'échantillonnage du signal induit relevé aux bornes de l'inductance 3 après coupure du courant et des moyens 6 de conversion analogique/digital des échantillons fournis par les moyens 5 précités.

Selon une autre caractéristique de l'invention, les moyens 7 d'analyse, par exemple sous la forme d'une unité informatique, comprennent des moyens de détermination de la forme et de la position de la courbe temporelle représentative du signal induit relevé aux bornes de l'inductance après coupure, des moyens de comparaison desdites caractéristiques avec des caractéristiques de référence mémorisées et des moyens de déduction de la nature, la composition, la masse et/ou l'épaisseur du matériau conducteur de l'objet 1 soumis à l'influence du champ magnétique généré par ladite inductance 3.

Grâce au mode de détection mis en oeuvre par l'invention, au moins l'inductance 3 peut être montée dans une enveloppe ou un boîtier de protection 8 hermétiquement clos, préférentiellement en acier inoxydable ou un alliage métallique analogue.

La déformation ou le décalage du signal induit analysé provoquée par cette enveloppe métallique 8 pourra être estimée dans une phase de calibrage du dispositif de capteur 2 et être prise en compte lors des opérations d'analyse des signaux dans les phases de détection.

L'invention sera à présent décrite plus en détail dans son mode de fonctionnement et en relation avec les dessins annexés.

L'unique inductance 3 montée de manière frontale au niveau de la face active 2' du dispositif de capteur 2 joue à la fois les rôles d'un émetteur et d'un récepteur de champ magnétique.

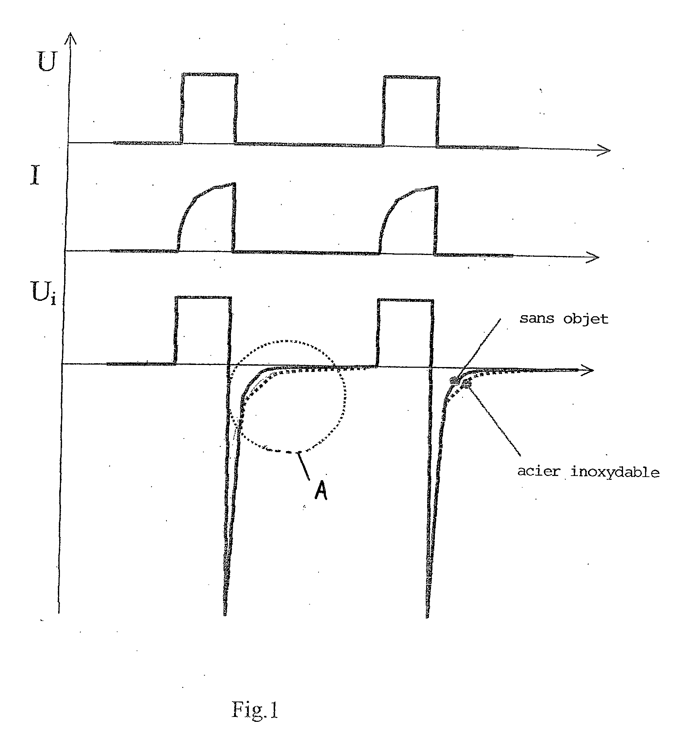

Au cours d'une première étape d'une séquence de détection selon l'invention, l'impulsion de tension U appliquée à la bobine 3 formant inductance induit dans cette dernière une impulsion de courant I qui, à son tour, induit le champ magnétique de détection dans la direction frontale active du dispositif capteur 2 (voir figure 1). Ce champ magnétique induit des courants de Foucault dans l'objet cible conducteur lorsque ce dernier entre dans la zone couverte par ledit champ.

Dans une deuxième étape, le courant dans l'inductance 3 est coupé ou annulé de manière abrupte (front descendant vertical au niveau du signal de courant I - voir figure 1) et les courants de Foucault circulant dans l'objet 1 ou dans la partie conductrice de ce dernier à ce moment-là, diminuent jusqu'à annulation complète. Ce faisant, ils induisent une tension dans l'inductance 3 formant récepteur, qui s'additionne à la tension d'auto-induction (voir courbe Ui de la figure 1).

De manière générale, la durée d'une séquence de détection (de l'établissement du champ magnétique de détection à l'annulation de la tension induite dans l'inductance) est généralement comprise entre 100 et 200 microsecondes.

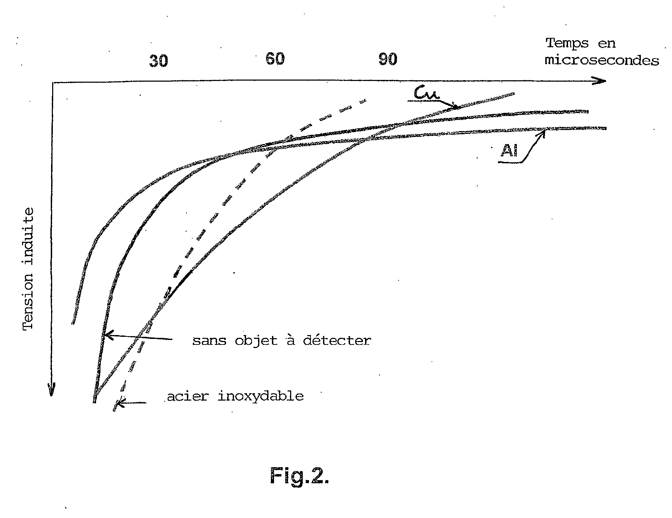

Une étude plus détaillée du phénomène qui est à la base de l'invention a permis de montrer que, de manière inattendue et surprenante, la décroissance de la tension induite s'effectue différemment selon la conductivité et l'épaisseur du matériau. La figure 2 montre différentes décroissances pour plusieurs matériaux conducteurs.

Comme on peut le relever sur cette figure, le signal correspondant à l'acier inoxydable est prévalant jusqu'à 30 microsecondes, le signal correspondant au cuivre étant dominant dans la période 40 à 70 microsecondes et après 90 microsecondes le signal correspondant à l'aluminium est nettement supérieur à ceux des deux métaux précédents.

Ainsi, en mesurant et en comparant les signaux de tension induits en présence d'un objet cible inconnu à 20, 50 et 100 microsecondes, il est aisément possible d'en tirer des conclusions quant à la nature ou la composition du matériau formant ou recouvrant ledit objet. Cette analyse permettra également d'ajuster la sensibilité du dispositif de capteur 2 en vue d'aboutir à une réaction identique pour tout type de matériau.

L'acquisition du signal se fera par la prise en compte d'au moins deux points de mesure dans la partie de la courbe du signal pertinent, préférentiellement d'au moins trois points.

Plus le nombre de points de mesure échantillonés et traités en vue de leur comparaison avec des données préstockées est important, plus le procédé de détection sera performant en termes de sensibilité, de précision, de fiabilité et de pouvoir de discrimination.

Ainsi, en utilisant au moins trois points de mesure, il sera possible de déterminer la nature d'un matériau magnétique, notamment ferromagnétique entrant dans le champ de détection, même lorsque ce matériau est présent en une couche de moins d'un millimètre.

De même, le procédé permettra de distinguer les différentes couches d'un stratifié de plusieurs matériaux ferromagnétiques distincts.

Enfin, l'analyse selon l'invention des caractéristiques de la partie pertinente de la courbe d'un signal de détection fourni par un matériau en couche et sa comparaison avec des valeurs résultant de mesures préalables sur différentes épaisseurs du même matériau, permettra de déterminer l'épaisseur de la couche de matériau analysé, en particulier lorsque celle-ci est inférieure à environ deux millimètres, préférentiellement inférieure à environ un millimètre.

Grâce aux dispositions selon l'invention et aux caractéristiques exposées ci-dessus, il est possible d'aboutir notamment aux avantages suivants :
- possibilité de monter le dispositif de capteur 2 dans un boîtier étanche en acier inoxydable ;
- possibilité de réaliser de la détection à grande distance (jusqu'à 20 millimètres à travers un boîtier d'épaisseur 0,5 millimètres en acier inoxydable) ;
- possibilité de détection avec un facteur 1 (c'est-à-dire que la distance de détection peut être indépendante du matériau constitutif de l'objet à détecter) ;
- excellente stabilité en température, du fait notamment de l'absence de tout circuit oscillant ;
- possibilité d'une grande fréquence de répétition des séquences successives de détection (jusqu'à 5 KHz), du fait de la très courte durée du phénomène exploité.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de détection d'un objet en un matériau conducteur électrique ou au moins partiellement recouvert d'un tel matériau, **caractérisé en ce qu'**il consiste à générer, au moyen d'une inductance (3) alimentée en conséquence, un champ magnétique apte à induire des courants de Foucault dans ledit matériau conducteur, lorsque ledit objet (1) se situe à une distance appropriée de ladite inductance (3), à couper de manière abrupte l'alimentation et le courant circulant dans ladite inductance (3), à relever le signal de tension et/ou de courant induit(e) dans cette inductance (3) par les courants de Foucault précités après coupure et à analyser les caractéristiques dudit signal ou desdits signaux, notamment sa ou leur décroissance, pour en déduire des informations concernant la nature et/ou l'épaisseur du matériau conducteur de l'objet (1) détecté et/ou la distance entre ladite inductance (3) et ledit objet (1).

2. Procédé selon la revendication 1, **caractérisé en ce que** l'alimentation de l'inductance (3) est réalisée au moyen d'impulsions de tension répétitives, la coupure du courant circulant dans l'inductance (3) étant synchronisée avec les fronts descendants desdites impulsions.

3. Procédé selon l'une quelconque des revendications 1 et 2, **caractérisé en ce qu'**il consiste à relier l'inductance (3) à une unité d'alimentation (4), par exemple sous la forme d'un générateur de signaux impulsionnels, durant la phase de génération du champ magnétique par ladite inductance (3) formant moyen émetteur de champ, et à relier ladite inductance (3) à des moyens (5 à 7) d'acquisition et d'exploitation des signaux de tension induits dans ladite inductance, par exemple sous la forme d'un module de numérisation, de traitement et d'évaluation desdits signaux, durant la phase d'induction magnétique par les courants de Foucault décroissants dans l'inductance (3) formant moyen récepteur de champ, les deux phases précitées étant répétées pour chaque impulsion du signal impulsionnel délivré par l'unité d'alimentation (4).

4. Procédé selon l'une quelconque des revendications 1 à 3, **caractérisé en ce que** l'acquisition du signal de tension induite dans l'inductance (3) après coupure du courant circulant dans cette dernière consiste à échantillonner ledit signal sur un intervalle temporel s'étendant entre 10 microsecondes et 150 microsecondes, préférentiellement entre 20 et 100 microsecondes, après ladite coupure, et à réaliser une conversion analogique/numérique des échantillons récupérés.

5. Procédé selon l'une quelconque des revendications 1 à 4, **caractérisé en ce que** l'analyse des caractéristiques du signal de tension ou d'intensité induit(e) dans l'inductance (3) consiste à déterminer la forme et la position, dans un diagramme temporel, de la courbe dudit signal au niveau de sa partie cintrée ou la valeur de certains points déterminés au moins de cette courbe, à comparer ces caractéristiques avec des caractéristiques de référence mémorisées, par exemple déterminées pendant une phase préalable de calibrage, et à en déduire la nature, la composition, la masse et/ou l'épaisseur du matériau conducteur de l'objet (1) soumis à l'influence du champ magnétique généré par ladite inductance (3).

6. Procédé selon l'une quelconque des revendications 1 à 4, **caractérisé en ce que** l'analyse des caractéristiques du signal de tension ou d'intensité induit(e) consiste à intégrer ledit signal sur une période temporelle déterminée en durée et en décalage par rapport à l'instant de coupure, puis à comparer la valeur intégrale résultante avec des valeurs de référence mémorisées, par exemple déterminées pendant une phase préalable de calibrage, et à en déduire la nature, la composition, la masse et/ou l'épaisseur du matériau conducteur de l'objet (1) soumis à l'influence du champ magnétique généré par ladite inductance (3).

7. Procédé selon l'une quelconque des revendications 1 à 6, **caractérisé en ce qu'**il consiste à analyser successivement plusieurs signaux de tension ou de courant induit(e) associés à plusieurs séquences de détection consécutives et à réaliser une évaluation globale des caractéristiques de ces différents signaux.

8. Dispositif de capteur inductif, notamment pour la mise en oeuvre du procédé de détection selon l'une quelconque des revendications 1 à 7, destiné à détecter et à permettre la caractérisation au moins partielle d'un objet en un matériau conducteur électrique, renfermant au moins une partie en un matériau conducteur ou au moins partiellement recouvert d'un tel matériau, **caractérisé en ce qu'**il comprend principalement une inductance (3) disposée au niveau de la partie ou de la face active (2') dudit capteur (2) et apte à générer un champ magnétique susceptible d'induire des courants de Foucault dans ledit matériau conducteur, des moyens (4) d'alimentation électrique de ladite inductance (3) et de coupure abrupte du courant circulant dans cette dernière, des moyens (5, 6) d'acquisition du signal de tension et/ou du signal de courant induit(s) dans ladite inductance (3) par lesdits courants de Foucault précités après coupure et des moyens (7) d'analyse des caractéristiques dudit signal ou desdits signaux généré(s) par induction pour en déduire des informations concernant la nature et/ou l'épaisseur du matériau conducteur de l'objet (1) détecté et/ou la distance entre ladite inductance (3) et ledit objet (1).

9. Dispositif de capteur selon la revendication 8, **caractérisé en ce que** les moyens (4) d'alimentation électrique consistent en un générateur d'impulsions de tension, préférentiellement de forme rectangulaire, et **en ce que** l'actionnement des moyens de coupure du courant circulant dans l'inductance (3) est synchronisée avec les fronts descendants desdites impulsions.

10. Dispositif de capteur selon l'une quelconque des revendications 8 et 9, **caractérisé en ce que** les moyens d'acquisition comprennent des moyens (5) d'échantillonnage du signal induit relevé aux bornes de l'inductance (3) après coupure et des moyens (6) de conversion analogique/digital des échantillons fournis par les moyens (5) précités.

11. Dispositif de capteur selon l'une quelconque des revendications 8 à 10, **caractérisé en ce que** les moyens (7) d'analyse comprennent des moyens de détermination de la forme et de la position de la courbe temporelle représentative du signal induit relevé aux bornes de l'inductance après coupure, des moyens de comparaison desdites caractéristiques avec des caractéristiques de référence mémorisées et des moyens de déduction de la nature, la composition, la masse et/ou l'épaisseur du matériau conducteur de l'objet (1) soumis à l'influence du champ magnétique généré par ladite inductance (3).

12. Dispositif de capteur selon l'une quelconque des revendications 8 à 11, **caractérisé en ce qu'**au moins l'inductance (3) est montée dans une enveloppe ou un boîtier de protection (8) hermétiquement clos, préférentiellement en acier inoxydable ou un alliage métallique analogue.
